# EUROPÄISCHE PATENTANMELDUNG

(11) **EP 2 019 246 A2**
(43) Veröffentlichungstag der Anmeldung: **28.01.2009**
(21) Anmeldenummer: 08013414.1
(22) Anmeldetag: 25.07.2008
(51) Int. Cl.: F16L 25/00

(54) **Anordnung zur Befestigung einer Leitung mit einem profilierten Aussendurchmesser und Montageverfahren**

(30) Priorität: 27.07.2007 DE 202007010592 U
(71) Anmelder: AZ Industrietechnik GmbH & Co. KG, 61276 Weilrod (DE)
(72) Erfinder: Zimmermann, Klaus, 61276 Weilrod (DE)
(74) Vertreter: Thomas, Matthias

(57) **Zusammenfassung**

Die Erfindung betrifft eine Anordnung zur Befestigung einer Leitung mit einem profilierten Außendurchmesser, bei der ein Leitungsende (15) wenigstens eine umlaufende Formhinterschneidung hat und in einer konischen Bohrung (4) angeordnet ist, darüber ein Ring (5) liegt, der mit seinem vorderen Ende (6) in die konische Bohrung (4) ragt und darin zentriert ist, wobei dieser an seinem hinteren Ende (7) mit einer Axialkraft beaufschlagt list und dadurch am Leitungsende (15) ein flanschähnliches Gebilde (17) erzeugt, das gegenüber dem Bohrungsgrund (16) gedrückt wird. Die Erfindung betrifft weiterhin das Montageverfahren für die erfindungsgemäße Anordnung.

## Beschreibung

Die Erfindung betrifft Anschlussmöglichkeiten und Anschlussverfahren für Leitungen, die im Anschlussbereich einen profilierten Außendurchmesser haben. Vorzugsweise für Leitungen, die mit parallel gewellten Wellrohren oder Wellschläuchen ausgeführt sind.

Es ist bekannt, dass der Anschluss von Wellrohren oder Wellschläuchen mit herkömmlichen Verschraubungen aus dem Stand der Technik nicht möglich ist. Dies ist sowohl durch die Art der Wellrohre, die spiralförmig oder parallel gewellt sein können, als auch durch die Vielzahl der unterschiedlichen Wellprofile bedingt. Mithin müssen für den jeweiligen Wellrohranschluss spezifisch ausgelegte Anschlusstechniken und die dazu notwendigen Teile geschaffen werden.

Es sind im Stand der Technik 3 verschiedene Formen von Anschlussverbindungen üblich:

Eine erste Form der Anschlüsse lässt das Leitungsende des Wellrohres oder Wellschlauches weitgehend unverändert. Der Anschluss erfolgt mit angepassten Formstücken, die durch Anschlussstutzen und Überwurfmutter vollständig gefasst werden.
Die Formstücke umfassen das jeweilige Leitungsende und werden in der konischen Bohrung mit Befestigungsmitteln in der Anschlussstelle fixiert. Entsprechende Vorschläge enthalten beispielsweise DE 41 05 662 A1, US 2,363,586 und KR 10 2006 010 3698 A. Derartige Formstücke müssen in Abmessungen und Form der anzuschließenden Leitung angepasst sein. Es ist eine umfangreiche Lagerhaltung spezieller Teile notwendig. Da die Formstücke abdichten müssen, kann auch eine zusätzliche Vorbereitung der Leitungsenden oder der Formstücke notwendig sein. Dies kann den Einsatz zusätzlicher Dichtstoffe oder Klebstoffe oder ein direktes Anformen der Formstücke an das Leitungsende erfordern.

Eine zweite Anschlussform lässt ebenfalls das Leitungsende des Wellrohres oder -schlauches weitgehend unverändert. Es wird ein Wellental im Bereich des Leitungsendes genutzt, um dort ein Dichtungselement, beispielsweise einen O-Ring, zur Abdichtung der Verbindung einzusetzen.

Das Leitungsende ist in einer zylindrischen Bohrung geführt, gegen die der 0-Ring abdichtet. Solche Verbindungen sind beispielsweise in DE 92 17 131 U1 und DE 299 17 599 U1 beschrieben.
Diese Anschlussform ist nur geeignet bei parallel gewellten Wellrohren oder Wellschläuchen. Sie erfordert zusätzliche Teile, die das Leitungsende axial sichern und für die wiederum eine umfangreiche Lagerhaltung nötig ist.

Die oben beschriebenen Bauformen von Anschlussverbindungen erfordern stets eine spezielle Ausführung der Anschlusselemente sowie erhebliche Montageaufwendungen. Sie sind nicht universell einsetzbar.

Eine dritte Ausführungsform geht von einem Leitungsende des Wellrohres oder Wellschlauches aus, an dem entweder vor der Herstellung der Anschlussverbindung ein vorgeformtes Leitungsende erzeugt oder bei der während des Erzeugens der Anschlussverbindung durch Deformation insbesondere des Leitungsendes die Dichtheit erreicht wird.

Das im Installationsbereich vorherrschende Bestreben, Leitungen schnell und unkompliziert herzurichten und anzuschließen, ist beispielsweise durch eine Verbindung nach dem Vorschlag in DE 298 18 534 U1 zu erfüllen. Jedoch sind auch bei dieser Art der Verbindung Zusatzarbeiten notwendig, indem eine Vorbereitung des Leitungsendes dergestalt erfolgt, dass zunächst Befestigungselemente aufgeschoben und anschließend mit einer Stauchvorrichtung endständige Wellenberge gestaucht werden müssen. Ähnlich muss auch nach dem Vorschlag in EP 0 557 597 A1 gearbeitet werden.

Nach einem Vorschlag in EP 1 347 227 B1 kann eine Wellrohrverbindung so ausgeführt werden, dass eine vormontierte Verschraubung im Ausgangszustand es erlaubt, das Leitungsende eines parallel gewellten Wellrohres durch die Überwurfmutter hindurch bis zum Anschlag am Bohrungsgrund des Anschlussstutzens einzuschieben. Dabei soll durch einen Sprengring auch eine einem Rastvorgang ähnliche Folge von Arbeitsschritten absolviert werden. Beim Anziehen der Überwurfmutter soll dann der Sprengring in ein Wellental nahe dem Leitungsende eingedrückt werden, darin mit dem Wellrohr und der Überwurfmutter eine formschlüssige Verbindung herstellen und zugleich bei weiterem Anzug der Überwurfmutter am Leitungsende ein flanschähnliches Gebilde erzeugen, das gegen den Bohrungsgrund abdichtet. Ein zylindrischer Druckring überträgt dabei die Axialkraft der Überwurfmutter auf den Sprengring, wodurch dieser den endständigen Wellenberg des Wellrohres axial staucht und das flanschähnliche Gebilde erzeugt. Unter Verspannung dichtet diese Verschraubung lediglich am Bohrungsgrund der konischen Bohrung gegenüber dem flanschähnlich verformten Leitungsende. Die danach hergestellte Verbindung ist nicht zuverlässig dicht, da der kreisförmige Querschnitt des für die Deformation des endständigen flanschähnlichen Gebildes verantwortlichen Sprengringes, die gewünschte Deformation nur bedingt leisten kann. Solcher Art Verbindungen können deshalb nur in niedrigen Druckstufen eingesetzt werden. Ein weiterer Nachteil besteht in der Notwendigkeit, einen speziell angefertigten Anschlussstutzen verwenden zu müssen. Der des weiteren notwendige Stützring erhöht den Aufwand. Ebenso erhöht sich die Wahrscheinlichkeit der Herstellung von Fehlverbindungen.

Es sind weitere Anschlussverschraubungen mit parallel gewellten Wellrohren oder Wellschläuchen bekannt, bei denen das Leitungsende - wenigstens der endständige Wellenberg - beim Herstellen der Verbindung verformt wird. Hierzu bedient man sich zunächst speziell profilierter konischer Bohrungen, die im Bohrungsgrund ein von der Geraden abweichendes Profil haben. Weiterhin sind Befestigungsmittel, wie Überwurfmuttern, so ausgeführt, dass sie ausreichend Raum für die Einlage eines geschlitzten oder segmentierten Druckringes haben, der beim Anzug der Verbindung über Einführschrägen formschlüssig in ein Wellental des Leitungsendes gedrückt wird und dabei wenigstens den endständigen Wellenberg gegen den Bohrungsgrund verformt. Die Abdichtung wird entweder mit elastischen Dichtelementen oder als Linienbzw. Flächendichtung ausgeführt. Sie erfolgt nur zwischen der Stirnseite des Leitungsendes und dem Bohrungsgrund. Der Druckring kann verschieden ausgeführt sein, hat jedoch keinen Anteil am Dichtsystem.
So ist in DE 27 24 862 A1 ein Anschluss für ein Koaxialkabel mit einem Mantel mit Wellrohrprofil beschrieben, dessen endständiger Wellenberg gegen einen Konus gedrückt wird und bei dem Feuchtigkeitsdichtheit hergestellt werden soll.

Nach einem Vorschlag in DE 697 02 254 T2 soll der endständige Wellenberg gegen eine konische Stirnfläche oder eine Nut oder einen Bund deformiert werden, wobei der die Axialkraft übertragende Druckring ein segmentierter Ring ist.

Ein Vorschlag aus DE 600 19 377 T2 sieht die Verwendung einer Schraube mit Aufnahmebohrung für ein Wellrohr und eine Einschraubbohrung vor, die im Bohrungsgrund zweifach konisch ausgeführt ist. Die Schraube besitzt an ihrem vorderen Ende in der Bohrung eine Nut, sodass die Stirnseite beim Anziehen der Schraube durch die außen liegende konische Fläche nach innen gedrückt wird, in das endständige Wellental eingreift, sich gegen den endständigen Wellenberg abstützt und diesen gegen die innen liegende konische Fläche verpresst, wobei ein flanschähnlicher Bund entsteht. Nach diesem Vorschlag ist ein zusätzlicher Zentrierring nötig und die Schraube muss an ihrem vorderen Ende zusätzlich geschlitzt werden, weshalb eine solche Verbindung trotz ihrer Einfachheit ausschließlich Sonderteile erforderlich macht und eine entsprechende Vorratswirtschaft notwendig ist.

Nach WO 2004/072 535 soll ein Wellrohr mit einem segmentierten Druckring gegen einen profilierten Bohrungsgrund verspannt und dabei ebenfalls ein flanschähnliches Gebilde angeformt werden. Auch hier sind ausschließlich Sonderteile im Einsatz.

Nach DE 70 33 356 U soll der endständige Wellenberg in einer ersten Ausführung gegen einen in einen Stutzen eingelegten Druckring durch Verformen des endständigen Wellenberges mithilfe eines Druckringes erfolgen. Eine zweite Ausführung macht ein vorheriges Deformieren des Leitungsendes notwendig, wobei der Stützring auf das Leitungsende zu schieben ist und der Mantel der Leitung gegen den Außendurchmesser des Stützringes verpresst wird. Nachteilig ist in beiden Fällen die Notwendigkeit, besondere Stützringe und Druckringe verwenden zu müssen.

Nach dem Vorschlag gemäß DE 201 21 607 U1 soll ein Druckring über eine Einführschräge unter gleichzeitiger Deformation in eine zylindrische Bohrung gedrückt werden und dabei zugleich den endständigen Wellenberg gegen den Bohrungsgrund verformen und abdichten. Dabei unterliegt der Druckring erheblichen Verformungskräften, die zu erhöhten Drehmomenten beim Anzug der Überwurfmuttern führen. Um dies zu vermeiden, ist einerseits eine reibungsmindernde Beschichtung des Druckringes und andererseits dessen wellenförmiger Querschnitt vorgesehen, das wiederum dazu führt, dass der Druckring selbst am Dichtsystem dieser Verbindung nicht teilhaben kann.

Von den bekannten Schneidringverschraubungen her ist bekannt, dass eine zuverlässige Abdichtung auch durch eine hohe Flächenpressung an der Außenseite des Schneidringes und eine ebenso große Flächenpressung unter teilweisem Formschluss bzw. Linienabdichtung im Bereich zwischen Schneidring und Rohr zu erreichen ist. Solche Verbindungen werden mit konischen Aufnahmebohrungen ausgeführt, die vorzugsweise einen Öffnungswinkel von 24° haben. Solcher Art Schneidringverschraubungen können jedoch nicht bei dünnwandigen, am Leitungsende ausgeformten Leitungen, mit Wellrohren oder Wellschläuchen hergestellt werden. Ein Schneidring darf nicht in ein dünnwandiges Rohr einschneiden. Es ist deshalb auch keine axiale Sicherung des Leitungsendes zu erreichen. Ebenso wenig würde das Dichtsystem der Schneidringverschraubung funktionieren.

Es ist deshalb Aufgabe der Erfindung, eine Wellrohrverbindung vorzuschlagen, die Leitungsenden zumindest gegen den Bohrungsgrund der Aufnahmebohrungen dichtet, bei der Montage wenigstens einen endständigen Wellenberg deformiert und leicht und einfach herstell- und montierbar ist, mit wenigen Teilen auskommt, bei der nach Möglichkeit standardisierte Teile verwendbar sind und die die Nachteile der Verbindungen des Standes der Technik nicht hat.

Nach der Erfindung wird dies für die Anordnung zur Befestigung einer Leitung nach den Merkmalen des kennzeichnenden Teils des Schutzanspruches 1 in Verbindung mit den Merkmalen des Oberbegriffes dieses Anspruches, für das Montageverfahren nach den Merkmalen des kennzeichnenden Teils des Patentanspruches 8 in Verbindung mit den Merkmalen des Oberbegriffes dieses Patentanspruches. Nachgeordnete und Unteransprüche beschreiben weitere Ausführungsformen der Erfindung.

Nachstehend werden in der Beschreibung verwendete Begriffe mit folgendem Bedeutungsinhalt verwendet:
Leitung mit profiliertem Leitungsende - ist jede Leitung, die im Bereich des Leitungsendes eine ringförmige Formhinterschneidung ausgebildet hat, unabhängig davon, ob diese bei der Leitung bereits vorhanden oder nachträglich ausgeformt worden ist.
Wellrohr - ist jede Form eines parallel gewellten Wellrohres oder -schlauches, unabhängig davon, aus welchem Werkstoff es besteht.
Konische Bohrung - ist eine Bohrung, die geeignet ist, das Leitungsende einer anzuschließenden Leitung aufzunehmen, zu zentrieren und die einen Anschlag in axialer Richtung bereitstellt.
Ring - ist ein Bauteil mit einem Innendurchmesser größer als der Außendurchmesser der Leitung und einem Außendurchmesser, der wenigstens in Teilbereichen kleiner ist, als der Außendurchmesser der konischen Bohrung im Einführungsbereich.
Befestigungsmittel - ist ein Bauteil, das geeignet ist, eine Leitung sowie ergänzende Bauteile eines Leitungsanschlusses mit einer Axialkraft ausreichender Größe zu verspannen, das Leitungsende zu deformieren und die für Festigkeit, Zusammenhalt und Dichtheit erforderlichen Voraussetzungen schafft.

Erfindungsgemäß wird ein Leitungsende, das eine Formhinterschneidung hat, in eine konische Bohrung eingeführt und stößt dabei in axialer Richtung gegen einen Anschlag am Bohrungsgrund. Auf dem Leitungsende ist ein Ring vorhanden, der im Ausgangszustand der Anordnung auf der Leitung zumindest partiell verschiebbar ist. Das vordere Ende des Ringes ist in die konische Bohrung einführbar und wird durch diese zentriert. Durch eine Axialkraft, die vorzugsweise durch ein Befestigungselement der Anordnung auf den Ring übertragen wird, wird derselbe in die konische Bohrung eingeschoben und dabei so deformiert, dass sich dessen vorderes Ende verjüngt und dessen Stirnseite sich hinter die Formhinterschneidung des Leitungsendes legt. Durch die Axialkraft wird das Leitungsende gegen den Bohrungsgrund gedrückt und zwischen der Stirnseite des Leitungsendes und dem Bohrungsgrund eine Linien- oder Flächenabdichtung erreicht, nachdem das Leitungsende in etwa flanschförmig zusammengedrückt wurde. Gleichzeitig wird zwischen der Stirnseite am vorderen Ende des Rings und der ringförmigen Formhinterschneidung des Leitungsendes eine Linien- oder Flächendichtung erreicht. Ebenso wird eine Flächendichtung zwischen der Mantelfläche des Rings und der Aufnahmebohrung erreicht. Abhängig von der Art der Leitung kann auch eine Flächendichtung zwischen der Mantelfläche der Leitung und der Bohrung des Rings entstehen.

Der Ring ist so ausgelegt, dass er zumindest mit einem Teilbereich seiner Länge durch die aufgebrachte Axialkraft in die konische Bohrung gedrückt werden kann und in dieser deformiert wird. Die Deformation soll dabei im Bereich des vorderen Endes zu einer Durchmesserverringerung führen, während in anderen Teilbereichen des Ringes eine Querschnittsvergrößerung wünschenswert ist. Das Profil des Rings ist diesen Zielstellungen entsprechend ausgeführt.
Erfindungsgemäß ist die gestellte Aufgabe lösbar mit einem Ring, der eine zylindrische Bohrung hat und dessen Mantelfläche vom vorderen Ende zum hinteren Ende hin konisch, gestuft oder konvex gewölbt oder mit unterschiedlichen Wölbungen versehen ausgeführt ist.

Die Bohrung ist nach der Erfindung konisch mit zylindrischem Bohrungsgrund, konisch oder zylindrisch ausgeführt. Sie kann bei zylindrischer Ausführung mit einer Einführschräge oder einer Rundung zum Zentrieren des Ringes versehen sein.

Die Axialkraft wird vorzugsweise durch Befestigungsmittel aufgebracht, wobei diese aus dem Stand der Technik bekannt sind und vorzugsweise die bekannten Überwurfmuttern verwendet werden. Im Fall der Verwendung von Überwurfmuttern ist die Bohrung regelmäßig Bestandteil eines Stutzens mit einem angeformten Außengewinde.

Es wurde gefunden, dass die erfindungsgemäße Verbindung eine besondere Eignung bei Anschlüssen von Wellrohren mit einem parallel gewellten Profil besitzt. In diesen Fällen wird die Formhinterschneidung durch die Wellen des Wellrohres oder -schlauches gebildet und der Ring kann sich mit seinem vorderen Ende dagegen abstützen. Ebenso kann die Erfindung auch bei Anschlüssen mit gebördelten Leitungsenden oder solchen aus leicht verformbaren Werkstoffen eingesetzt werden.
Es wurde ferner gefunden, dass die zur Herstellung der Erfindung notwendige Verringerung des Durchmessers am vorderen Ende des Rings neben einer konischen, gestuften oder gewölbten Außenkontur desselben auch mit einer konischen Aufnahmebohrung erreicht werden kann. Insbesondere wurde gefunden, dass die von den bekannten Schneidringverschraubungen her verfügbaren Aufnahmebohrungen mit 24°-Konus geeignet sind. Damit eröffnet die Erfindung Möglichkeiten, Leitungsanschlüsse ohne Bereitstellung neuer individuell angepasster Anschlusselemente oder -bohrungen zu erzeugen.
Ebenso wurde gefunden, dass herkömmliche Überwurfmuttern bei entsprechender Dimensionierung des Ringes verwendbar sind und deshalb auch dafür keine Sonderbauteile nötig sind.

Die Vorteile der erfindungsgemäßen Anordnung werden insbesondere dann deutlich, wenn ein Wellrohr anzuschließen ist. Wellrohre werden gewöhnlich durch Trennschnitte in den Wellentälern auf die benötigte Gesamtlänge gebracht. Ein so vorbereitetes Leitungsende kann in eine vormontierte Anschlusseinheit, die bereits den Ring und ein Befestigungsmittel enthält, eingeschoben werden, ohne dass das Wellrohr einer Zusatzbehandlung bedarf. Nachdem das Wellrohr bis zum Anschlag an den Bohrungsgrund eingeschoben ist, wird über das Befestigungsmittel eine Axialkraft auf den Ring übertragen, durch die er in die konische Bohrung gedrückt wird und sich gleichzeitig verjüngt.
Mindestens im Bereich des endständigen Wellenberges legt sich das vordere, inzwischen deformierte, Ende des Rings an die seitliche Flanke des Wellenberges und staucht diesen in axialer Richtung. Der Wellenberg kann dabei so weit axial verformt werden, dass beide Flanken aneinander liegen, wobei durch gleichzeitige Durchmesservergrößerung ein flanschähnliches Gebilde entsteht. Abhängig von der Ausgestaltung des Bohrungsgrundes entsteht dabei eine Linien- oder Flächendichtung. Diese kommt ohne zusätzliche elastische Dichtmittel aus. Die Vorderseite des Rings stützt sich dabei gegen die rückseitige Flanke des entstandenen flanschähnlichen Gebildes ab und bildet dort eine Flächendichtung aus. Weiterhin bildet der Ring gegen die Mantelfläche der Bohrung eine Linien- oder Flächendichtung aus. Welcher Art diese Abdichtung ist, hängt von der Gestaltung des Rings im Ausgangszustand und dem Ergebnis der Deformation ab.
Die so ausgeführte Anordnung stellt eine Verbindung für Leitungen, insbesondere für Wellrohre bereit, die ein mehrfaches Dichtsystem besitzt, das einerseits mit sehr hohen Flächenpressungen arbeiten kann und andererseits mit hoher Zuverlässigkeit die Herstellung einer dichten Verbindung ermöglicht.

Der Ring ist abhängig vom jeweiligen Einsatzfall in seinem Querschnittsprofil unterschiedlich gestaltet. Er besitzt an seinem vorderen Ende eine kreisringförmige Stirnfläche, die auch konisch oder gewölbt sein kann und während der Deformation des Ringes unter Einwirkung von Axialkräften ihre Geometrie weitgehend beibehält. Beim Eindringen in die Konische Bohrung erfolgt jedoch eine Durchmesserverringerung soweit, dass in jedem Fall eine umlaufende Formhinterschneidung der Leitung erfasst wird, einen Widerstand darstellt und damit die Axialkraft auf das Leitungsende übertragen wird.
Im Fall des Anschlusses eines Wellrohres erfolgt dadurch auch eine Deformation dessen Leitungsendes bis zur Ausbildung eines flanschähnlichen Gebildes.
Der Ring besteht aus einem Werkstoff, der in der konischen Bohrung deformierbar ist. Werkstoff und Werkstoffparameter sind unterhalb der genannten Grenze beliebig wählbar.
Für den Fall, dass ein Wellrohr aus einem so genannten Edelstahl angeschlossen werden soll, hat sich ein Ringwerkstoff, der weicher ist als das Rohrmaterial, als geeignete Lösung herausgestellt. Damit wird ein Einschneiden in den Rohrwerkstoff und damit zufällige ungewollte Schäden zuverlässig vermieden.

Wird die Anordnung vorzugsweise mit einer 24°-konischen Bohrung ausgeführt, ergibt sich eine auch im Hinblick auf die Reibungsverhältnisse günstige Werkstoff-Paarung, wenn der Ring aus zinn-, zink-, aluminium-, berylliumhaltigen Kupferlegierungen oder kupferhaltigen Mehrstofflegierungen besteht. Ebenso eignen sich Ringe aus Aluminium oder Weicheisen.

Das erfindungsgemäße Montageverfahren besteht darin, dass zunächst ein Leitungsende durch Trennen in etwa rechtwinklig bearbeitet wird. Gegebenenfalls kann bei bestimmten Leitungen zunächst noch das Ausformen einer Formhinterschneidung notwendig sein. Auf dem Leitungsende ist ein Ring und ein Befestigungselement aufgeschoben, wobei das Befestigungselement möglicherweise auch erst in einem späteren Arbeitsschritt zugeordnet wird. Das vorbereitete Leitungsende wird bis zum Anschlag am Bohrungsgrund in eine konische Bohrung eingeschoben und nachfolgend der Ring in Richtung der konischen Bohrung verschoben; bis er in dieser zentriert wird. Anschließend wird das Befestigungsmittel in Richtung der Anschlussstelle verschoben und verbunden, wobei gleichzeitig auf den Ring eine Axialkraft wirkt, die ihn in die konische Bohrung drückt, dabei deformiert und wobei sich der Ring mit der Stirnseite am vorderen Ende an eine Formhinterschneidung des Leitungsendes anlegt, das Leitungsende deformiert und verspannt. Im Ergebnis des Montageverfahrens entsteht eine Abdichtung zwischen dem Bohrungsgrund und der deformierten Stirnseite des Leitungsendes, der Stirnseite am vorderen Ende des Rings und der Rückseite des deformierten Leitungsendes sowie zwischen der Mantelfläche der Bohrung und der Mantelfläche des Rings.

Eine Ausgestaltungsform des Montageverfahrens besteht darin, dass eine Wellrohrleitung mit parallel gewelltem Profil angeschlossen wird, wobei wenigstens ein endständiger Wellenberg deformiert wird.

Eine weitere Ausgestaltungsform des Montageverfahrens besteht darin, dass Ring und Befestigungselement bereits vormontiert sind, während das Leitungsende durch eine Öffnung des Befestigungselements und dem Ring bis zum Anschlag am Bohrungsgrund eingeschoben wird und beim nachfolgenden Anziehen des Befestigungselements die Deformation des Leitungsendes und die Abdichtung erfolgt.

Die Erfindung wird nachstehend anhand eines Ausführungsbeispieles näher erläutert. Dabei zeigen:
- Fig. 1 -: einen Schnitt durch eine erfindungsgemäße Verbindung;
- Fig. 2 -: den zur Anordnung gehörenden Ring.

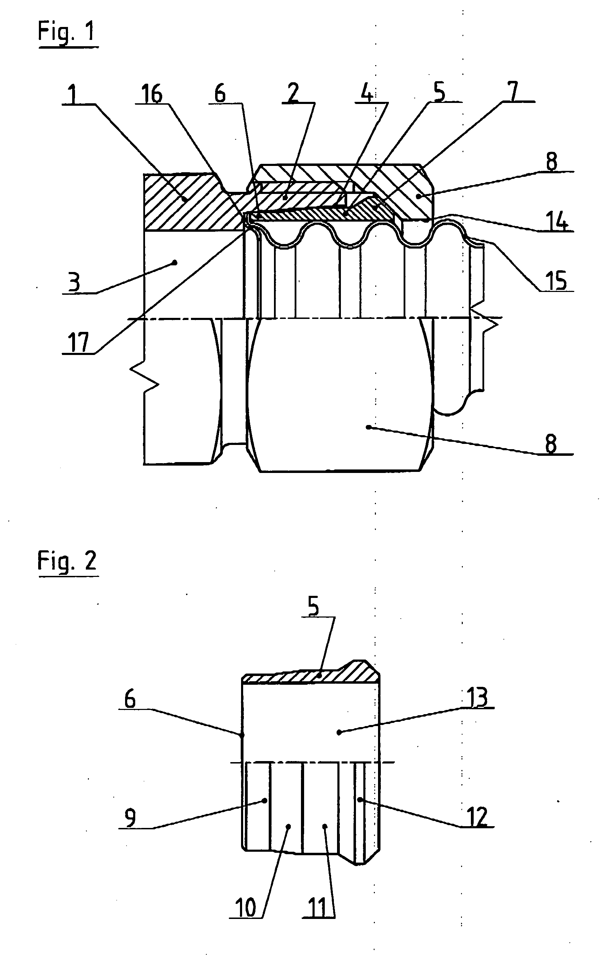

Ein Anschlussstutzen (1) ist mit einem Außengewinde (2) ausgeführt und hat konzentrisch zu seinem Leitungskanal (3) angeordnet eine konische Bohrung (4). Diese Anordnung ist im Ausgangszustand so aufgebaut, dass ein Ring (5) mit seinem vorderen Ende (6) teilweise in die konische Bohrung (4) hineinragt und sein hinteres Ende (7) von einer Überwurfmutter (8) gehalten ist, wobei konische Bohrung (4) und Überwurfmutter (8) den Ring (5) zentrieren. In diesem Zustand ist der Ring (5) nicht deformiert und hat am vorderen Ende (6) einen in etwa zylindrischen Ansatz (9), nachfolgend einen konischen Übergang (10), wiederum einen zylindrischen Abschnitt (11) und daran anschließend eine zweiseitige konische Erweiterung (12), während im Inneren eine Bohrung (13) ausgeführt ist, die in ihrem Durchmesser wenigstens dem Durchmesser des Durchbruches (14) in der Überwurfmutter (8) gleich ist.
Ein Leitungsende (15) eines Wellrohres wird durch die vormontierte Anordnung aus Stutzen (1), Ring (5) und Überwurfmutter (8) hindurch bis zum Anschlag am Bohrungsgrund (16) geführt und in dieser Stellung festgehalten. Durch Anzug der Überwurfmutter (8) wird der Ring (5) in die konische Bohrung (4) gedrückt, erfasst den in Fig. 1 nicht dargestellten endständigen Wellenberg und deformiert diesen zu einem flanschähnlichen Gebilde (17). Bei maximaler Verspannung ergibt sich somit eine Flächendichtung zwischen dem Bohrungsgrund (16) und der Stirnseite des flanschähnlichen Gebildes (17). Wenigstens eine linienförmige Abdichtung ergibt sich zwischen dem vorderen Ende (6) des Rings (5) und der konischen Bohrung (4). In etwa im Bereich des vorher zylindrischen Abschnitts (11) des Rings (5) ergibt sich eine Flächendichtung zur konischen Bohrung (4).

Die Erfindung hat also den Vorteil, dass sie eine wesentlich verbesserte Abdichtung gewährleistet, mit herkömmlichen Bauteilen bei den Aufnahmebohrungen (Anschlussstutzen) und Befestigungsmitteln (Überwurfmuttern) arbeiten kann und lediglich ein in Eigenschaften und Abmessungen speziell angepasster Ring zum Einsatz kommt.

### Bezugszeichenliste

- 1: Anschlussstutzen
- 2: Außengewinde
- 3: Leitungskanal
- 4: Konische Bohrung
- 5: Ring
- 6: Vorderes Ende des Rings [5]
- 7: Hinteres. Ende des Rings [5]
- 8: Überwurfmutter
- 9: Zylindrischer Ansatz
- 10: Konischer Übergang
- 11: Zylindrischer Abschnitt
- 12: Konische Erweiterung
- 13: Bohrung
- 14: Durchbruch
- 15: Leitungsende
- 16: Bohrungsgrund
- 17: Flanschähnliches Gebilde

## Patentansprüche

1. Anordnung zur Befestigung einer Leitung mit einem profilierten Außendurchmesser, mit
einem Leitungsende (15),
das wenigstens eine umlaufende Formhinterschneidung hat,
das in einer konischen Bohrung (4) angeordnet ist,
ein Ring (5); der über dem Leitungsende (15) liegt,
der mit seinem vorderen Ende (6) in die konische Bohrung (4) ragt und durch diese zentriert ist,
der an seinem hinteren Ende (7) mit einer Axialkraft beaufschlagt und durch diese unter Deformation in die Aufnahmebohrung gedrückt ist,
wobei das vordere Ende (6) des Rings (5) unter Deformation und/oder Reduzierung des Durchmessers in die umlaufende Formhinterschneidung des Leitungsendes schiebbar ist,
die Stirnseite des Rings (5) mit einer Flanke der Formhinterschneidung des Leitungsendes Kontakt hat und bei weiterer Verschiebung in die Formhinterschneidung eingreift, diese deformiert und ein flanschähnliches Gebilde (17) erzeugt,
und eine Abdichtung zwischen der Vorderseite des flanschähnlichen Gebildes (17) und dem Bohrungsgrund, der Rückseite des flanschähnlichen Gebildes und der Stirnseite des Rings (5) sowie der Mantelfläche des Rings (5) und der Innenseite der konischen Bohrung (4) erreichbar ist
**dadurch gekennzeichnet, dass**
der Ring (5) eine Bohrung (13)
und eine gewölbte und/oder gestufte und/oder konische Mantelfläche hat.

2. Anordnung zur Befestigung einer Leitung nach Anspruch 1,
**dadurch gekennzeichnet, dass**
das Leitungsende aus einem Wellrohr oder -schlauch mit parallel angeordneten Wellen oder einer Rohr- oder Schlauchleitung mit einem Bördelrand besteht.

3. Anordnung zur Befestigung einer Leitung nach einem der Ansprüche 1 oder 2,
**dadurch gekennzeichnet, dass**
die Aufnahmebohrung zylindrisch oder konisch ist.

4. Anordnung zur Befestigung einer Leitung nach einem der Ansprüche 1 bis 3,
**dadurch gekennzeichnet, dass**
der Bohrungsgrund (16) der Aufnahmebohrung eben, konisch, mit einer Rippe oder mit einem erhöhten Rand im Bereich des Leitungskanals versehen ist.

5. Anordnung zur Befestigung einer Leitung nach einem der Ansprüche 1 bis 4,
**dadurch gekennzeichnet, dass**
der Ring (5) an seinem vorderen Ende (6) eine gerade und/oder gestufte und/oder konische und/oder gewölbte und/oder kantige Stirnseite hat.

6. Anordnung zur Befestigung einer Leitung nach einem der Ansprüche 1 bis 5,
**dadurch gekennzeichnet, dass**
der Ring (5) an seinem hinteren Ende (7) eine gerade und/oder gestufte und/oder konische und/oder gewölbte und/oder kantige Stirnseite hat.

7. Anordnung zur Befestigung einer Leitung nach einem der Ansprüche 1 bis 6,
**dadurch gekennzeichnet, dass**
der Ring (5) aus einem verformbaren Werkstoff
oder einem Werkstoff mit geringerer Gestaltfestigkeit als der umgebende Werkstoff der Aufnahmebohrung besteht
und/oder dass der Ring (5) eine geringere Härte hat, als der Werkstoff der zu befestigenden Leitung
und/oder dass der Ring (5) eine größere Härte hat als der Werkstoff, aus dem die zu befestigende Leitung besteht.

8. Montageverfahren für eine Anordnung zur Befestigung einer Leitung nach einem der Ansprüche 1 bis 7, bei dem
ein Leitungsende (15) durch Trennen in etwa rechtwinklig bearbeitet wird,
anschließend ein Befestigungsmittel auf das Leitungsende (15) aufgeschoben wird,
danach ein Ring (5) auf das Leitungsende (15) aufgeschoben wird das Leitungsende (15) bis zum Anschlag am Bohrungsgrund (16) in eine konische Bohrung (4) eingeschoben wird,
nachfolgend der Ring (5) in Richtung zur konischen Bohrung (4) verschoben wird und mit der Vorderseite in derselben zentriert,
das Befestigungsmittel verschoben und befestigt wird, wobei gleichzeitig eine auf den Ring (5) einwirkende Axialkraft entwickelt wird,
**dadurch gekennzeichnet, dass**
der Ring (5) unter gleichzeitiger Deformation in die konische Bohrung (4) gedrückt wird, sich mit der Stirnseite am vorderen Ende (6) an eine Formhinterschneidung des Leitungsendes (15) anlegt, das Leitungsende (15) axial verschiebt und verspannt.

9. Montageverfahren für eine Anordnung zur Befestigung einer Leitung nach Anspruch 8,
**dadurch gekennzeichnet, dass**
das Leitungsende (15) an einem Wellrohr erzeugt wird
und der Ring (5) sich gegen die Flanke eines Wellenberges des Wellrohres abstützt und nachfolgend den Wellenberg unter gleichzeitiger Durchmesservergrößerung zu einem flanschähnlichen Gebilde (17) verformt und dasselbe gegen den Bohrungsgrund (16) verspannt.

10. Montageverfahren für eine Anordnung zur Befestigung einer Leitung nach einem der Ansprüche 8 oder 9,
**dadurch gekennzeichnet, dass**
das Leitungsende (15) durch den Durchbruch (14) des Befestigungsmittels und die Bohrung (13) des Rings (5) bis zum Anschlag am Bohrungsgrund (16) der konischen Bohrung eingeführt wird.
